# EUROPEAN PATENT APPLICATION

(11) **EP 3 174 142 A1**
(43) Date of publication of application: **31.05.2017**
(21) Application number: 15825046.4
(22) Date of filing: 23.07.2015
(51) Int. Cl.: H01M 4/525, H01M 4/505

(54) **PREPARATION METHOD OF LITHIUM NICKEL MANGANESE OXIDE ANODE MATERIAL**

(30) Priority: 25.07.2014 US 201462029117 P
(71) Applicant: Advanced Lithium Electrochemistry Co., Ltd., Taoyuan City Taoyuan County, 330 (TW)
(72) Inventor: HUANG, Chun-Ming, Taoyuan City 330 (CN); LIN, Hsiang-Pin, Taoyuan City 330 (CN); HSIEH, Han-Wei, Taoyuan City 330 (CN)
(74) Representative: 2K Patentanwälte Blasberg Kewitz & Reichel
(86) International application number: PCT/CN2015/084908
(87) International publication number: WO 2016/011962

(57) **Abstract**

A method of preparing a lithium nickel manganese oxide cathode material comprises the following steps of providing a precursor material, the precursor material comprises a lithium compound, a nickel compound and a manganese compound, mixing and grinding the lithium compound, the nickel compound and the manganese compound to from a cathode material precursor having a specific span value or a specific value of 90 percent particle size volume distribution (D₉₀), (wherein the specific span value is greater than or equal to 1.0 µm and lesser than or equal to 2.0 µm, the specific value of 90 percent particle size volume distribution is greater than or equal to 0.3 µm and lesser than or equal to 0.4 µm), and processing a thermal treatment to the cathode material precursor to form the lithium nickel manganese oxide cathode material.

## Description

### FIELD OF THE INVENTION

The present disclosure relates to a method of preparing lithium nickel manganese oxide cathode material, and more particularly to a method of grinding a cathode material precursor to a specific span value first, and subsequently processing a calcination, so as to form the lithium nickel manganese oxide cathode material.

### BACKGROUND OF THE INVENTION

Along with diversified development of electronic products, there is increasing need for portable power supplies. For example, consumer electronic products, medical devices, motorcycles, automobiles, and power tools and the like require a portable power supply for power source. The reusable secondary batteries are widely used for current portable power supplies. Among the existing categories of secondary batteries, since lithium secondary batteries have a high ratio of volume to capacity, pollution-free, good performance of charge/discharge cycling properties, and no memory effect, it has a greater development potential in the future.

The compound derived from spinel-phase lithium manganese oxide material, the lithium nickel manganese oxide material, has advantages of high safety and enhanced life circle. In recent years, because the lithium nickel manganese oxide material has high working voltage platform of 4.7V, it has been widely studied.

In the industrial application, manufacturing the lithium nickel manganese oxide material usually uses solid-state reaction method. The solid-state reaction method is a powder manufacturing technique having the advantages of simple, inexpensive and ease of massive production. The principle of the solid-state reaction method is making the ions of the raw material diffuse during thermal treatments, so that the desired product can be produced. The solid-state reaction method is often used in making the powder material of structural ceramic, electrical ceramic and energy industries. However, the product of solid-state reaction method usually has a second phase impurity, which causes the performance decrement of electrical properties of the produced cathode material.

Therefore, there is a need of providing a method of preparing lithium nickel manganese oxide cathode material so as to obviate the drawback encountered from the prior arts that the use of solid-state reaction method accompanies with the generation of the second phase impurity in the crystal structure of the produced lithium nickel manganese oxide cathode material.

### SUMMARY OF THE INVENTION

It is an object of the present disclosure to provide a method of preparing lithium nickel manganese oxide cathode material for solving the performance decrement of electrical properties of the lithium nickel manganese oxide cathode material caused by the second phase impurity generated during the calcination.

It is another object of the present disclosure to provide a method of preparing lithium nickel manganese oxide cathode material for decreasing the second phase impurity generated during the calcination of the cathode material precursor by adjusting the grinding time and controlling the particle size of cathode material precursor, so as to get better performances of the electrical properties.

In accordance with an aspect of the present disclosure, a method of preparing lithium nickel manganese oxide cathode material is provided. The method comprises the following steps: (a)providing a precursor material, the precursor material comprises a lithium compound, a nickel compound and a manganese compound, (b)mixing and grinding the lithium compound, the nickel compound and the manganese compound to from a cathode material precursor having a specific span value or a specific value of 90 percent particle size volume distribution (D₉₀), (wherein the specific span value is greater than or equal to 1.0 µm and lesser than or equal to 2.0 µm, the specific value of 90 percent particle size volume distribution is greater than or equal to 0.3 µm and lesser than or equal to 0.4 µm), and (c)processing a thermal treatment to the cathode material precursor to form the lithium nickel manganese oxide cathode material.

In accordance with another aspect of the present disclosure, a method of preparing lithium nickel manganese oxide cathode material is provided. The method comprises the following steps: (a)providing a precursor material, (b)grinding the precursor material for a specific time by a solid-state solving and grinding technique, and a cathode material precursor is formed, and (c)processing a thermal treatment to the cathode material precursor to form the lithium nickel manganese oxide cathode material. A second phase impurity generated during the thermal treatment of the cathode material precursor is decreased through grinding the precursor material.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a flow chart illustrating the method of preparing lithium nickel manganese oxide cathode material according to a preferred embodiment of the present disclosure;
FIG. 2 is a flow chart illustrating the method of preparing lithium nickel manganese oxide cathode material according to another preferred embodiment of the present disclosure;
FIG. 3 is a schematic view illustrating the particle size volume distribution of the lithium nickel manganese oxide cathode material under the conditions of different grinding times;
FIG. 4 is a schematic view illustrating the stack of particles under the conditions of different grinding times;
FIG. 5 is a schematic view illustrating the XRD test result of the lithium nickel manganese oxide cathode material generated after the thermal treatment under the condition of 6 hours grinding time;
FIG. 6 is a schematic view illustrating the XRD test result of the lithium nickel manganese oxide cathode material generated after the thermal treatment under the condition of 9 hours grinding time;
FIG. 7 is a schematic view illustrating the XRD test result of the lithium nickel manganese oxide cathode material generated after the thermal treatment under the condition of 24 hours grinding time;
FIG. 8 is a schematic view illustrating the intensity of the characteristic peaks of the second phase impurity under the conditions of different grinding times;
FIG. 9 is a schematic view illustrating the electrical properties test result of the lithium nickel manganese oxide cathode material generated after the thermal treatment under the conditions of grinding the cathode material precursor in different times.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

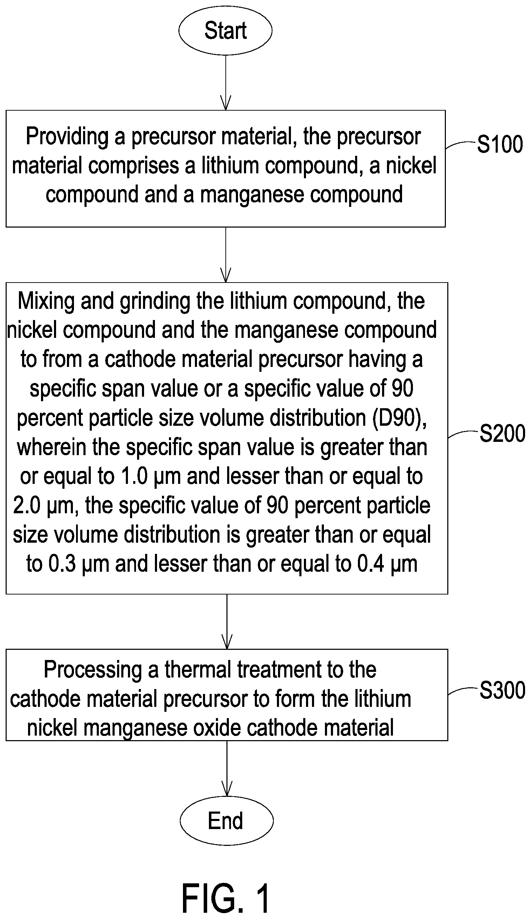

Please refer to Fig. 1. FIG. 1 is a flow chart illustrating the method of preparing lithium nickel manganese oxide cathode material according to a preferred embodiment of the present disclosure. As shown in the figure, the method of preparing lithium nickel manganese oxide cathode material according to the preferred embodiment of the present disclosure includes the following steps. Firstly, as shown in the step S100, providing a precursor material. The precursor material comprises a lithium compound, a nickel compound, and a manganese compound. The lithium compound is not limited to lithium carbonate or lithium hydroxide, the manganese compound is not limited to trimanganese tetraoxide or manganese carbonate, and the nickel compound is not limited to nickel oxide or nickel acetate. Then, as shown in step S200, mixing the lithium compound, the nickel compound, and the manganese compound, and grinding them to from a cathode material precursor having a specific span value or a specific value of 90 percent particle size volume distribution (D₉₀). The specific span value is greater than or equal to 1.0 µm and lesser than or equal to 2.0 µm, the specific value of 90 percent particle size volume distribution is greater than or equal to 0.3 µm and lesser than or equal to 0.4 µm.

Finally, as shown in step S300, processing a thermal treatment to the cathode material precursor to form the lithium nickel manganese oxide cathode material. In this embodiment, the general formula of the lithium nickel manganese oxide cathode material is not limited to Li_{0.1}N_{0.5}Mn_{1.5}O₄.

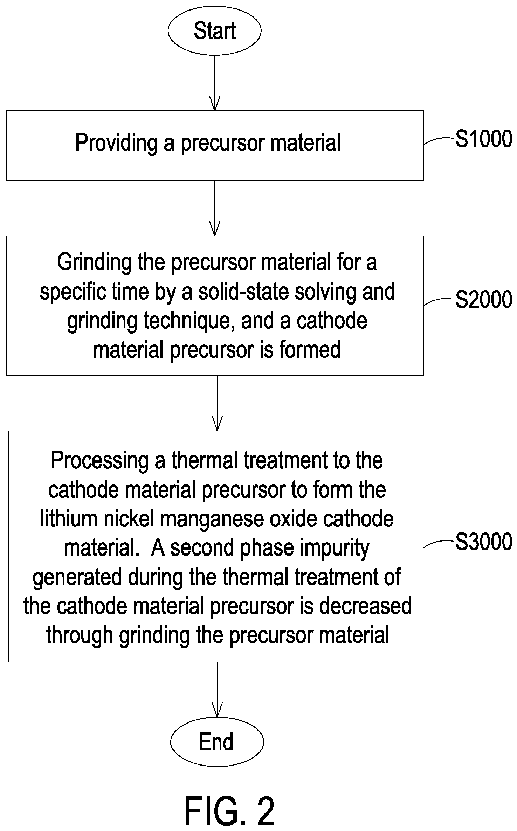

Please refer to Fig. 2. FIG. 2 is a flow chart illustrating the method of preparing lithium nickel manganese oxide cathode material according to another preferred embodiment of the present disclosure. As shown in the figure, the method of preparing lithium nickel manganese oxide cathode material according to another embodiment of the present disclosure includes the following steps. Firstly, as shown in step S1000, providing a precursor material. In this embodiment, the precursor material includes a lithium compound, a nickel compound and a manganese compound. Then, as shown in step S2000, grinding the precursor material for a specific time by solid-state solving and grinding technique, and a cathode material precursor is formed. The specific time is n hours, and n is lesser than or equal to 24 and greater than or equal to 6. Finally, as shown in step S3000, processing a thermal treatment the cathode material precursor to form the lithium nickel manganese oxide cathode material. The second phase impurity generated during the thermal treatment of the cathode material precursor is decreased through grinding the precursor material. In this embodiment, the general formula of the lithium nickel manganese oxide cathode material is not limited to Li_{0.1}N_{0.5}Mn_{1.5}O₄, and the general formula of the second phase impurity is not limited to Li_{0.4}Ni_{1.6}O₂.

The following describes the meaning of span value and how to calculate the span value. The span value is calculated by 90 percent particle size volume distribution (D₉₀) minus 10 percent particle size volume distribution (D₁₀) first, and then divided the result by 50 percent particle size volume distribution (D₅₀). The equation of span value is that: Span=(D₉₀-D₁₀)/D₅₀. Span value represents the degree of particle diameter dispersion. In other word, when the span value of a powder is lesser, it means the particle diameter distribution is narrower and the particle diameters of the particles of the powder are more similar.

The following describes the method of preparing lithium nickel manganese oxide cathode material of the present disclosure by several exemplary examples.

### Embodiment 1:

Firstly, putting zirconium oxide (ZrO₂) balls having diameters of 0.8 mm into a ball milling barrel to serve as grinding balls, then adding 1.7 liter of water. Secondly, adding 118.75 grams of lithium carbonate (Li₂CO₃) to serve as the first material, 112.27 grams of nickel oxide (NiO) to serve as second material, and 522 grams of manganese carbonate (MnCO₃) to serve as third material, and then, the precursor material is formed. Then, grinding the precursor material for 6 hours, after that, a cathode material precursor is formed. Next, drying the cathode material precursor and then putting it into a ceramic saggar. Subsequently, calcining the cathode material precursor in the air atmosphere under the temperature of 700-900°C for 10 hours, and the lithium nickel manganese oxide cathode material is produced. The general formula of the lithium nickel manganese oxide cathode material is Li_{0.1}N_{0.5}Mn_{1.5}O₄.

### Embodiment 2:

Replacing the grinding time of example 1 by 9 hours, the other conditions are maintained the same and are not described here redundantly.

### Embodiment 3:

Replacing the grinding time of example 1 by 24 hours, the other conditions are maintained the same and are not described here redundantly.

### Embodiment 4:

Replacing the lithium carbonate (Li₂CO₃) serving as the first material of example 1 by 71.82 grams of lithium hydroxide (LiOH), the other conditions are maintained the same and are not described here redundantly. It is noted that the first material of the present disclosure can be chosen from many sources and is not limited to lithium carbonate or lithium hydroxide, anything contains lithium can be chosen to serve as the first material of the present disclosure.

### Embodiment 5:

Replacing the nickel oxide (NiO) serving as the second material of example 1 by 179.85 grams of nickel carbonate (NiCO₃), the other conditions are maintained the same and are not described here redundantly. It is noted that the second material of the present disclosure can be chosen from many sources and is not limited to nickel oxide or nickel carbonate, anything contains nickel such as nickel acetate, can be chosen to serve as the second material of the present disclosure.

### Embodiment 6:

Replacing the manganese carbonate (MnCO₃) serving as the third material of example 1 by 346.68 grams of trimanganese tetraoxide (Mn₃O₄), the other conditions are maintained the same and are not described here redundantly. It is noted that the third material of the present disclosure can be chosen from many sources and is not limited to manganese carbonate or trimanganese tetraoxide, anything contains manganese can be chosen to serve as the first material of the present disclosure.

### Electrical Properties test:

Respectively combining the lithium nickel manganese oxide cathode material (Li_{0.1}N_{0.5}Mn_{1.5}O₄) powder of examples 1 to 3 with carbon black (Super P) and 4% binder (PVDF1700+NMP), then process electrical properties test. The details are described below:

Firstly, mixing 0.5 grams of carbon black (Super P) with 12.5 grams of binder (PVDF:NMP=40:960) under the rotating speed of 1200 rpm for 10 minutes. Then adding 9 grams of Li_{0.1}N_{0.5}Mn_{1.5}O₄ powder into the above compound and mixing them for 10 minutes. After that, spreading the already-dispersed slurry on an aluminum baseboard with thickness of 0.2 mm by using a blade coater, and then a pole piece is formed. Next putting the pole piece into an oven and drying the pole piece under 110°C for 1 hours, then a battery pole piece is formed.

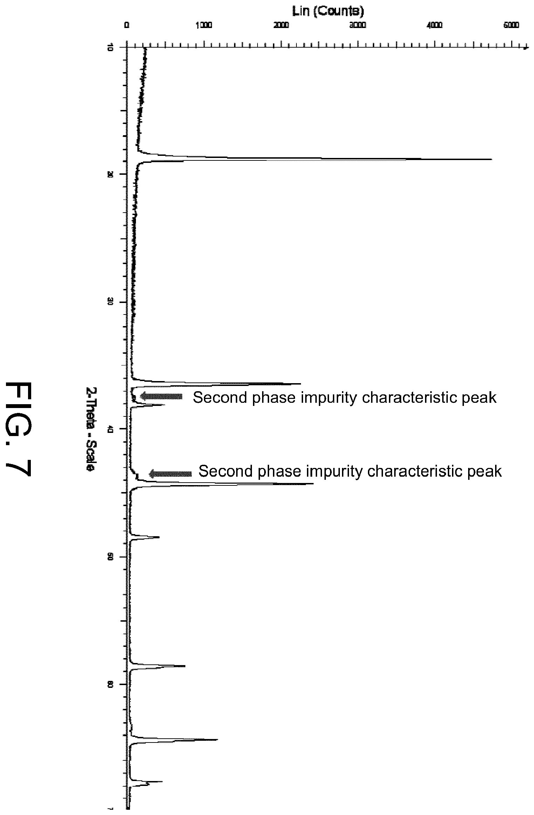

After that, assembling the battery. Firstly, cutting out a circle pole piece with diameter of 1.3 cm from the dried pole piece to serve as positive electrode, and use lithium metal as negative electrode. The, assembling the positive electrode and the negative electrode to from a 2032 coin cell. The electrolyte used in this coin cell is the solution of LiPF₆ (1M concentration) mixed with ethylene carbonate (EC) and dimethyl carbonate (DMC), and the volume ratio of EC and DMC is 1:1. For example, the electrolyte is LIPATE-EDEC/PF1, Tomiyama Pure Chemical Industry, Japan. After the assembly of battery, use a charge/discharge equipment to test the electrical properties under the conditions of 0.1C charge/discharge rate for 2 cycles and 2C charge/discharge rate for 2 cycles. The tested voltage range is from 3.2 V to 4.9 V. The results are shown in Fig. 7 and will be described in detail later.

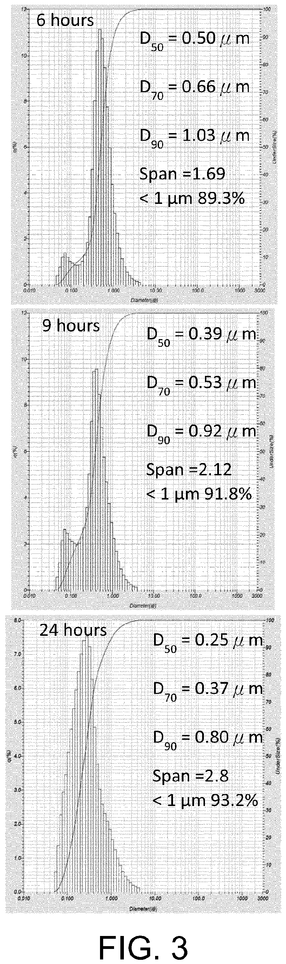

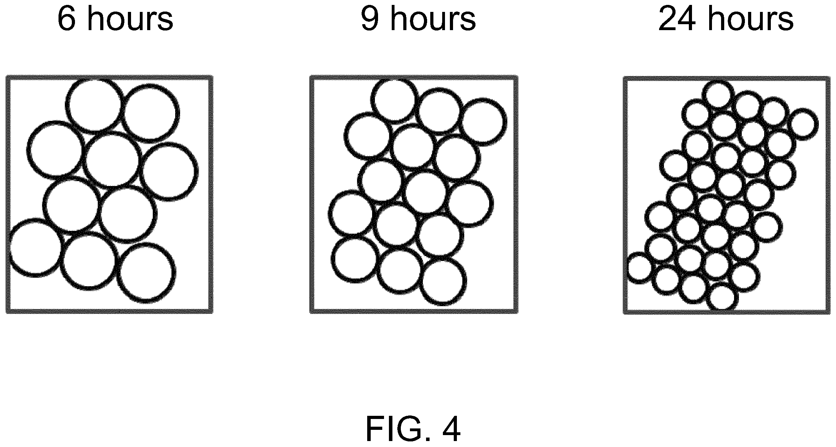

Please refer to Fig. 3 and Fig. 4. FIG. 3 is a schematic view illustrating the particle size volume distribution of the lithium nickel manganese oxide cathode material under the conditions of different grinding times. FIG. 4 is a schematic view illustrating the stack of particles under the conditions of different grinding times. The difference among the examples 1 to 3 is the grinding time, and different grinding time result in different stack conditions of particles. As shown in Fig. 3, the 50 percent particle size volume distribution (D₅₀) of the cathode material precursor grinded for 6 hours is 0.50µm; the 50 percent particle size volume distribution (D₅₀) of the cathode material precursor grinded for 9 hours is 0.39 µm; and the 50 percent particle size volume distribution (D₅₀) of the cathode material precursor grinded for 24 hours is 0.25 µm. Accordingly, as shown in Fig. 4, with longer grinding time, the diameters of most of the particles of the produced cathode material precursor become smaller, and the stack condition of the particles is denser.

The theoretical capacity of lithium nickel manganese oxide cathode material is about 146 to 147 mAh/g. After several experiments, it is concluded that when the value of 50 percent particle size volume distribution (D₅₀) of the precursor material is from 0.1 to 0.2 µm, the value of 90 percent particle size volume distribution (D₉₀) of the precursor material is from 0.3 to 0.4 µm, and the span value of the precursor material is from 1.0 to 2.0, the lithium nickel manganese oxide cathode material generated after calcination has the capacity of at least 130 mAh/g under 0.1C charge/discharge condition.

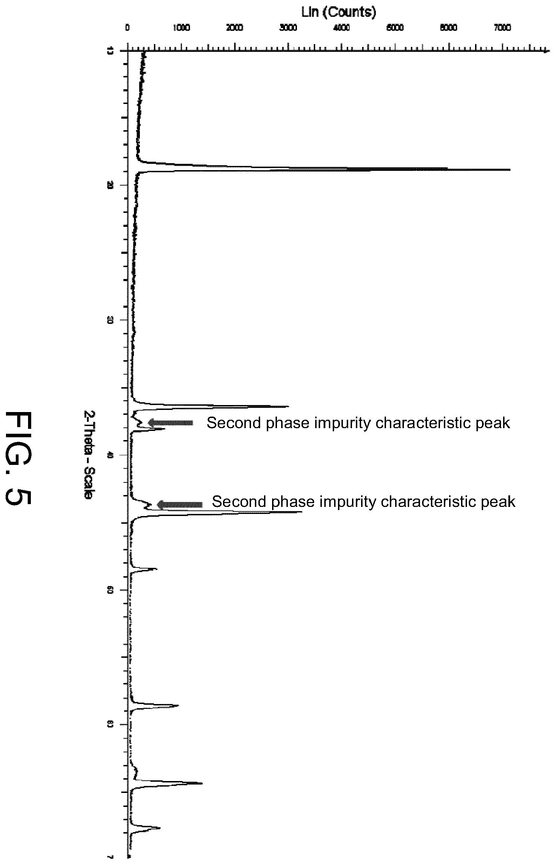

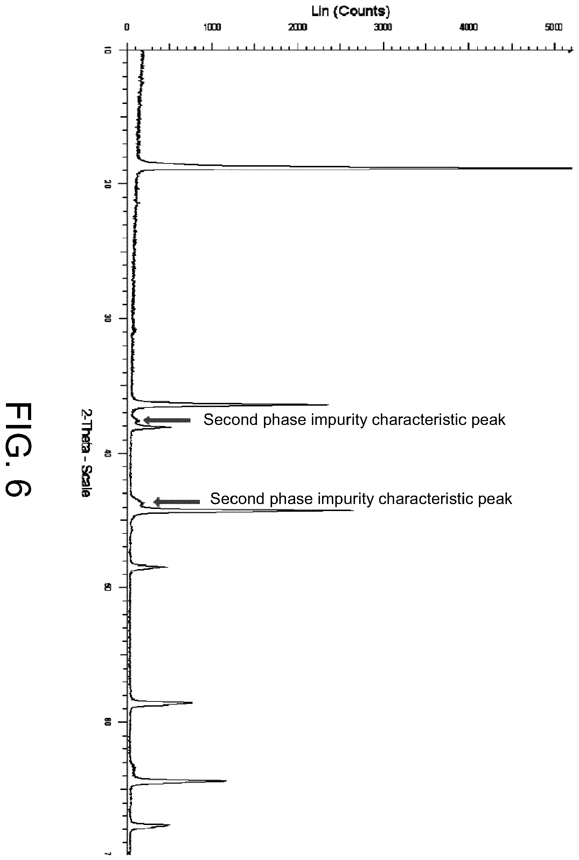

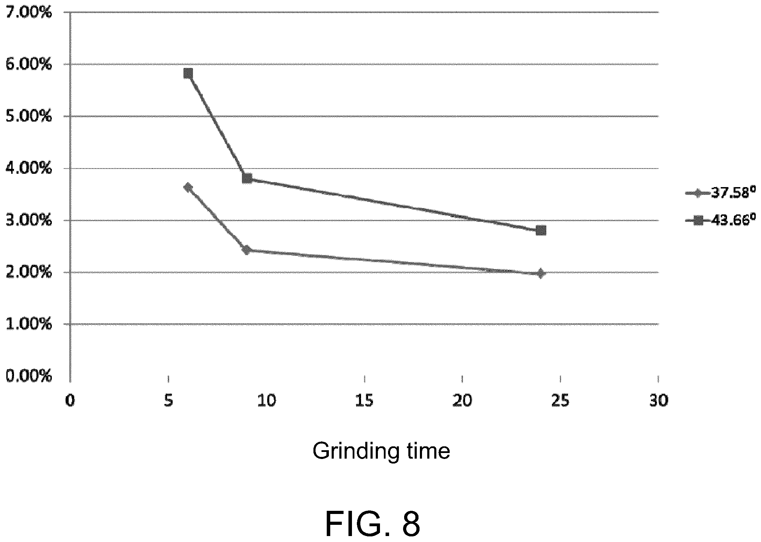

Please refer to Fig. 5-8. FIG. 5 is a schematic view illustrating the XRD test result of the lithium nickel manganese oxide cathode material generated after the thermal treatment under the condition of 6 hours grinding time. FIG. 6 is a schematic view illustrating the XRD test result of the lithium nickel manganese oxide cathode material generated after the thermal treatment under the condition of 9 hours grinding time. FIG. 7 is a schematic view illustrating the XRD test result of the lithium nickel manganese oxide cathode material generated after the thermal treatment under the condition of 24 hours grinding time. FIG. 8 is a schematic view illustrating the intensity of the characteristic peaks of the second phase impurity under the conditions of different grinding times. The arrows shown in Fig. 5-7 point out the point where the 2theta (2θ) are 37.58° and 43.66°, respectively, and it is obvious that there are two characteristic peaks located on the two points. The two characteristic peaks belong to the second phase impurity, Li_{0.4}Ni_{1.6}O₂, generated after the calcination. As shown in Fig. 6, it is obvious that the intensity of characteristic peak at the point where two 2theta (2θ) is 37.58° decreases with the increase of grinding time (from 6 hours to 24 hours), and the intensity of characteristic peak at the point where two 2theta (2θ) is 43.66° also decreases with the increase of grinding time (from 6 hours to 24 hours). Besides, from Fig. 5-7, it can be seen that the intensity of the characteristic peaks are decreased. Thus, it is supposed that the amount of second phase impurity Li_{0.4}Ni_{1.6}O₂ generated after calcination can be decreased by increasing the grinding time.

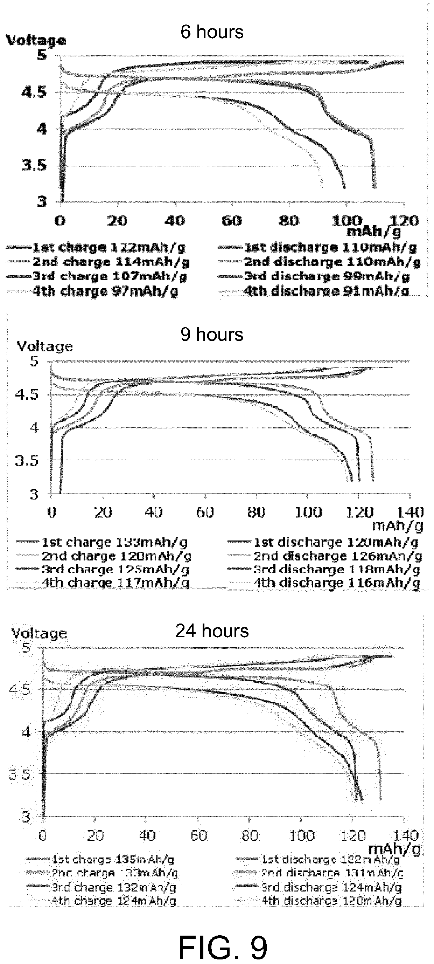

As shown in Fig. 9, FIG. 9 is a schematic view illustrating the electrical properties test result of the lithium nickel manganese oxide cathode material generated after the thermal treatment under the conditions of grinding the cathode material precursor in different times. The figure indicates that with longer grinding time, the 4.7 V nickel voltage platform (Ni²+→Ni⁴⁺) generates more contribution. On the other hand, the 4.1 V manganese voltage platform (Mn³⁺→Mn⁴⁺) generates lesser contribution and the capacity density becomes greater with longer grinding time. Accordingly, it is concluded that the diameter of cathode material precursor and the span value become smaller with the increased grinding time. This results in a more evenly-mixed cathode material precursor which is beneficial for the nickel ion to replace the manganese ion by solid-state solving during the calcination, and decrease the contribution of manganese voltage platform and improve the performances of electrical properties.

In conclusion, the present disclosure effectively decreases the second phase impurity generated during the thermal treatment of the cathode material precursor by adjusting the grinding time and controlling the particle size of the cathode material precursor, and thereby improves the performances of the electrical properties.

While the disclosure has been described in terms of what is presently considered to be the most practical and preferred embodiments, it is to be understood that the disclosure needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A method of preparing a lithium nickel manganese oxide cathode material, the method comprising the following steps of:
(a)providing a precursor material, the precursor material comprises a lithium compound, a nickel compound and a manganese compound;
(b)mixing and grinding the lithium compound, the nickel compound and the manganese compound to from a cathode material precursor having a specific span value or a specific value of 90 percent particle size volume distribution (D₉₀), wherein the specific span value is greater than or equal to 1.0 µm and lesser than or equal to 2.0 µm, the specific value of 90 percent particle size volume distribution is greater than or equal to 0.3 µm and lesser than or equal to 0.4 µm; and
(c)processing a thermal treatment to the cathode material precursor to form the lithium nickel manganese oxide cathode material.

2. The method according to claim 1, wherein a general formula of the lithium nickel manganese oxide cathode material is Li_{0.1}N_{0.5}Mn_{1.5}O₄.

3. The method according to claim 1, wherein the lithium compound is lithium carbonate or lithium hydroxide.

4. The method according to claim 1, wherein the nickel compound is nickel oxide or nickel acetate.

5. The method according to claim 1, wherein the manganese compound is trimanganese tetraoxide or manganese carbonate.

6. The method according to claim 1, wherein a specific value of 50 percent particle size volume distribution (D₅₀) of the cathode material precursor is greater than or equal to 0.1 µm and lesser than or equal to 0.2 µm.

7. A method of preparing a lithium nickel manganese oxide cathode material, the method comprising the following steps of:
(a)providing a precursor material;
(b)grinding the precursor material for a specific time by a solid-state solving and grinding technique, and a cathode material precursor is formed; and
(c)processing a thermal treatment to the cathode material precursor to form the lithium nickel manganese oxide cathode material;
wherein a second phase impurity generated during the thermal treatment of the cathode material precursor is decreased through grinding the precursor material.

8. The method according to claim 7, wherein a general formula of the lithium nickel manganese oxide cathode material is Li_{0.}1N_{0.5}Mn_{1.5}O₄.

9. The method according to claim 7, wherein the cathode material precursor formed after grinding the precursor material for the specific time of the step(b) has a specific span value, which is greater than or equal to 1.0 µm and lesser than or equal to 2.0 µm

10. The method according to claim 7, wherein the cathode material precursor formed after grinding the precursor material for the specific time of the step(b) has a specific value of 90 percent particle size volume distribution (D₉₀), which is greater than or equal to 0.3 µm and lesser than or equal to 0.4 µm.

11. The method according to claim 7, wherein the specific time is n hours, and n is lesser than or equal to 24 and greater than or equal to 6.

12. The method according to claim 7, wherein a general formula of the second phase impurity is Li_{0.4}Ni_{1.6}O₂.
